**Europäisches Patentamt**

**European Patent Office**

**Office européen des brevets**

(19)

(11)  **EP 1 383 322 A2**

(12)  **EUROPÄISCHE PATENTANMELDUNG**

(43) Veröffentlichungstag:
  **21.01.2004  Patentblatt 2004/04**

(51) Int Cl.⁷: **H04N 7/01**

(21) Anmeldenummer: **03014743.3**

(22) Anmeldetag: **27.06.2003**

(84) Benannte Vertragsstaaten:
  **AT BE BG CH CY CZ DE DK EE ES FI FR GB GR
  HU IE IT LI LU MC NL PT RO SE SI SK TR**
  Benannte Erstreckungsstaaten:
  **AL LT LV MK**

(30) Priorität: **17.07.2002  DE 10232372**

(71) Anmelder: **Micronas GmbH**
  **79108 Freiburg (DE)**

(72) Erfinder:
  • **Hahn, Marko**
    **81373 München (DE)**

  • **Rieder, Peter**
    **81737 München (DE)**
  • **Scheffler, Günter**
    **80939 München (DE)**
  • **Tuschen, Christian**
    **80687 München (DE)**
  • **Schu, Markus**
    **85435 Erding (DE)**

(74) Vertreter: **Bickel, Michael et al**
  **Westphal - Mussgnug & Partner
  Patentanwälte
  Mozartstrasse 8
  80336 München (DE)**

(54)  **Verfahren zur Interpolation eines Bildpunktes einer Zwischenzeile eines Halbbildes**

(57)  Die vorliegende Erfindung betrifft ein Verfahren zur Interpolation eines Bildpunktes einer Zwischenzeile eines ersten Halbbildes einer Folge von zeilenverkämmtem Halbbildern.

# FIG 1

A1

A2  P0

  Px

A3  P2

A4

Halbbild A

B1

B2  P1

B3

B4

Halbbild B

EP 1 383 322 A2

**Beschreibung**

Verfahren zur Interpolation eines Bildpunktes einer Zwischenzeile eines Halbbildes

Die vorliegende Erfindung betrifft ein Verfahren zur Interpolation eines Bildpunktes einer Zwischenzeile eines ersten Halbbildes einer Folge von zeilenverkämmtem Halbbildern.

Fernsehsignale enthalten üblicherweise Informationen für zeitlich aufeinanderfolgende Halbbilder, die am Bildschirm dargestellt sind, wobei jeweils zwei aufeinanderfolgende Halbbilder zeilenverkämmt (interlaced) sind, das heißt, jedes Halbbild enthält Bildinformationen nur in jeder zweiten Bildzeile, wobei eine Bildzeile, zu der in dem einen Halbbild Bildinformationen vorliegen, im jeweils anderen Halbbild leer ist.

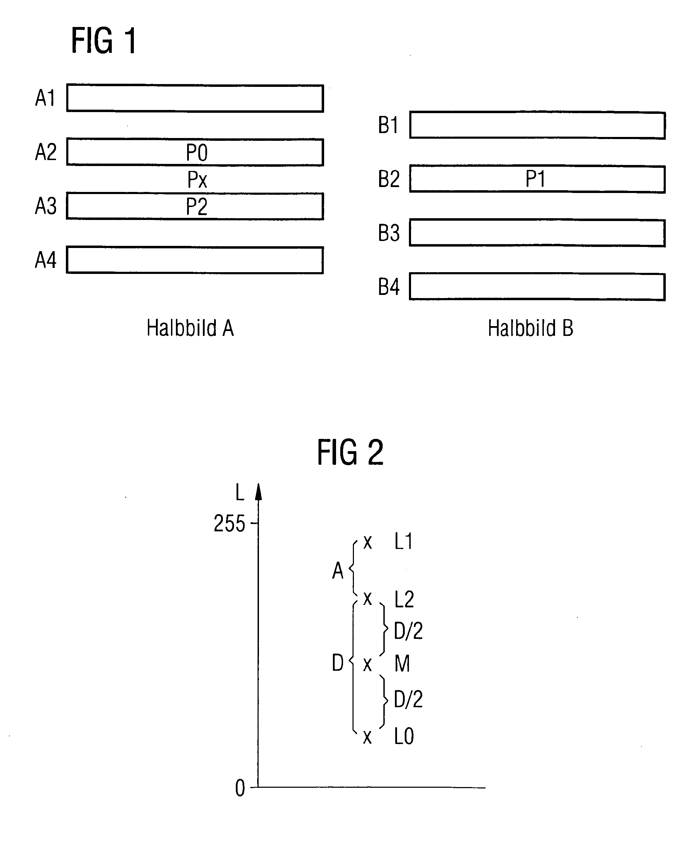

Figur 1 zeigt schematisch zwei derartige aufeinanderfolgende Halbbilder A und B, wobei das erste Halbbild A Bildzeilen A1, A2, A3 und A4 aufweist, zu welchem ein empfangenes Bildsignal Bildinformationen enthält, während das Halbbild B Bildzeilen B1, B2, B3, B4 aufweist, zu denen ein empfangenes Bildsignal Bildinformationen enthält, wobei die Rasterlagen der Halbbilder A und B so gegeneinander versetzt sind, dass die Positionen der Bildzeilen des Halbbildes B gerade den Positionen der leeren Zwischenzeilen des Halbbildes A entsprechen und umgekehrt.

Zur Steigerung der Bildqualität ist es vielfach erwünscht, bei der Darstellung eines eine Folge von Halbbildern aufweisenden Bildsignals Vollbilder zu generieren, das heißt Bilder, bei denen keine leeren Zwischenzeilen vorhanden sind.

In der EP 0192292 B1 wird zur Interpolation eines Bildpunktes einer Zwischenzeile eines Halbbildes vorgeschlagen, aus dem Halbbild, in dem der Bildpunkt zu interpolieren ist, zwei Bildpunkte auszuwählen, nämlich einen Bildpunkt einer Bildzeile oberhalb des zu interpolierenden Bildpunkts und einen Bildpunkt einer Bildzeile unterhalb eines zu interpolierenden Bildpunktes, wobei die horizontalen Lagen der ausgewählten Bildpunkte der horizontalen Lage des zu interpolierenden Bildpunktes entsprechen. Weiterhin wird aus einem zeitlich nachfolgenden Halbbild ein Bildpunkt aus einer Bildzeile ausgewählt, deren vertikale Lage der Lage der Bildzeile des zu interpolierenden Bildpunktes entspricht, wobei die horizontale Lage des ausgewählten Bildpunktes ebenfalls der horizontalen Lage des zu interpolierenden Bildpunktes entspricht. Bei dem bekannten Verfahren wird der Mittelwert der Bildinformationswerte - üblicherweise der Helligkeitswerte beziehungsweise Luminanzwerte - dieser drei Bildpunkte ermittelt und für den zu interpolierenden Bildpunkt wird die Bildinformation des Bildpunktes ausgewählt, dessen Bildinformationswert am nächsten zu dem ermittelten Mittelwert liegt. Der Bildpunkt des zweiten Halbbildes wird also dann für die Interpolation herangezogen, wenn der Bildinformationswert dieses Bildpunktes zwischen den Bildinformationswerten der Bildpunkte des Halbbildes mit dem zu interpolierenden Zwischenpunkt liegt. Andernfalls wird die Bildinformation eines der Bildpunkte aus der benachbarten Zeile des zu interpolierenden Bildpunktes ausgewählt, wodurch einer dieser Werte verdoppelt, das heißt zweimal untereinander dargestellt wird. Diese bloße Wiederholung eines Bildpunktes führt allerdings bei starken vertikalen Übergängen zu einer nicht positionsrichtigen Darstellung, was sich insbesondere an diagonal im Bild verlaufenden Kanten zeigt.

Ziel der vorliegenden Erfindung ist es deshalb, ein verbessertes Verfahren zur Interpolation eines Bildpunktes einer Zwischenzeile eines Halbbildes einer Folge von zeilenverkämmten Halbbildern zur Verfügung zu stellen.

Dieses Ziel wird durch ein Verfahren gemäß Anspruch 1 gelöst. Vorteilhafte Ausgestaltungen der Erfindung sind Gegenstand der Unteransprüche.

Bei dem erfindungsgemäßen Verfahren zur Interpolation eines Bildpunktes einer Zwischenzeile eines Halbbildes einer Folge von zeilenverkämmten Halbbildern ist vorgesehen, wenigstens einen ersten Bildpunkt einer oberhalb der Zwischenzeile liegenden Bildzeile in dem ersten Halbbild und wenigstens einen zweiten Bildpunkt einer unterhalb der Zwischenzeile liegenden Bildzeile in dem ersten Halbbild auszuwählen, sowie wenigstens einen dritten Bildpunkt aus einer Bildzeile, deren vertikale Position der Position der Zwischenzeile des zu interpolierenden Bildpunktes entspricht, aus einem zweiten Halbbild auszuwählen, welches dem ersten Halbbild zeitlich vorzugsweise folgt. Anschließend wird ein durch Bildinformationswerte des ersten und zweiten Bildpunktes gegebenes Intervall und die Position des Bildinformationswertes des dritten Bildpunktes bezogen auf die Intervallgrenzen ermittelt. Anschließend werden die Bildinformationswerte des ersten, zweiten und dritten Bildpunktes gemischt, indem der erste Bildinformationswert mit einem ersten Gewichtungsfaktor, der zweite Informationswert mit einem zweiten Gewichtungsfaktor und der dritte Bildinformationswert mit einem dritten Gewichtungsfaktor multipliziert und die gewichteten Bildinformationswerte addiert werden, wobei der Wert des dritten Gewichtungsfaktors von dem mathematischen Abstand des dritten Informationswertes zu der nächstliegenden Intervallgrenze abhängig ist.

Vorzugsweise nimmt der dritte Gewichtungsfaktor dabei mit zunehmendem Abstand zu der nächstliegenden Intervallgrenze ab, wenn der dritte Informationswert außerhalb des durch den ersten und zweiten Bildinformationswert gegebenen Intervalls liegt. Entsprechend nimmt der dritte Gewichtungsfaktor mit abnehmenden Abstand zu der Mitte des Intervalls zu, wenn der dritte Bildinformationswert innerhalb des Intervalls liegt, wobei die Zunahme beziehungsweise die Abnahme des Gewichtungsfaktors vorzugsweise proportional zu dem Kehrwert des Abstandes zu der nächstliegenden Intervallgrenze bzw. zu der Mitte des Intervalls ist.

Vorzugsweise sind der erste und zweite Gewichtungsfaktor für die Bildinformationswerte des ersten und zweiten Bildpunktes gleich groß.

Bei einer Ausführungsform des erfindungsgemäßen Verfahrens ist vorgesehen, dass der dritte Gewichtungsfaktor zu Null gesetzt wird, wenn sein mathematischer Abstand zwischen der nächstliegenden Intervallgrenze des durch die Bildinformationswerte des ersten und zweiten Bildpunktes vorgegebenen Intervalls einen auf die Intervallbreite normierten Grenzwert übersteigt, wobei dieser Grenzwert bei einer Ausführungsform der Erfindung der Intervallbreite oder dem doppelten der Intervallbreite entspricht.

Liegt der dritte Bildinformationswert innerhalb des Intervalls, so ist bei einer Ausführungsform vorgesehen, dass der dritte Gewichtungsfaktor zu 1 gesetzt wird. Eine weitere Ausführungsform sieht vor, den dritten Gewichtungsfaktor erst dann zu 1 zu setzen, wenn dessen mathematischer Abstand zu der Mitte des Intervalls kleiner als ein vorgegebener, auf die Intervallbreite normierter Wert ist, wobei dieser Grenzwert vorzugsweise weniger als ein Viertel der Intervallbreite entspricht.

Eine weitere Ausführungsform sieht vor, für den Fall, dass der dritte Bildinformationswert innerhalb des vorgegebenen Intervalls liegt, den ersten, zweiten und dritten Gewichtungsfaktor gleich groß zu wählen.

Eine Ausführungsform des erfindungsgemäßen Verfahrens sieht vor, die Mischung der drei Bildinformationswerte zweistufig durchzuführen, wobei in einer ersten Stufe die Bildinformationswerte des ersten und zweiten Bildpunktes gemischt werden, wobei die Bildinformationswerte hierbei beispielsweise gleichmäßig gewichtet werden, und wobei in einer zweiten Stufe der durch Mischen des ersten und zweiten Bildinformationswertes erhaltene Zwischenwert mit dem dritten Bildinformationswert gemischt wird, wobei der Gewichtungsfaktor des dritten Bildinformationswertes von dessen mathematischem Abstand zu den Intervallgrenzen abhängig ist. Für den Gewichtungsfaktor des Zwischenwertes gilt bei der Mischung in der zweiten Stufe, dass dieser der Differenz zwischen 1 und dem dritten Gewichtungsfaktor entspricht.

Vorzugsweise wird bei der Wahl des dritten Gewichtungsfaktors zusätzlich der mathematische Abstand des dritten Bildpunktes zu dem Zwischenwert berücksichtigt.

Die vorliegende Erfindung wird nachfolgend anhand von Figuren näher erläutert. In den Figuren zeigt

Figur 1    schematische Darstellungen zweiter zeitlich aufeinanderfolgender Halbbilder,

Figur 2    grafische Darstellung der Lage ausgewählter Bildinformationswerte in einer nach oben aufgetragenen Bildinformationswertskala,

Figur 3    erste Vorrichtung zur Durchführung eines erfindungsgemäßen Verfahrens,

Figur 4    zweite Vorrichtung zur Durchführung eines erfindungsgemäßen Verfahrens,

Figur 5    dritte Vorrichtung zur Durchführung eines erfindungsgemäßen Verfahrens,

Figur 6    vierte Vorrichtung zur Durchführung eines erfindungsgemäßen Verfahrens,

Figur 7    fünfte Vorrichtung zur Durchführung eines erfindungsgemäßen Verfahrens,

Figur 8    Verlauf der oberen Grenze des dritten Gewichtungsfaktors abhängig von dem dritten Bildinformationswert.

In den Figuren bezeichnen, sofern nicht anders angegeben, gleiche Bezugszeichen gleiche Teile mit gleicher Bedeutung.

Das erfindungsgemäße Verfahren zur Interpolation eines Bildpunktes Px einer Zwischenzeile eines schematisch in Figur 1 dargestellten Halbbildes A umfasst erfindungsgemäß das Auswählen eines ersten Bildpunktes P0 und eines zweiten Bildpunktes P2 in dem Halbbild A, in welchem der Bildpunkt Px der Zwischenzeile interpoliert werden soll. Der erste Bildpunkt P0 liegt dabei in einer Bildzeile A2, die oberhalb der Zwischenzeile des zu interpolierenden Bildpunktes Px liegt, und der zweite Bildpunkt P2 liegt in einer Bildzeile A3 unterhalb der Zwischenzeile mit dem zu interpolierenden Bildpunkt Px, wobei die horizontale Lage des ersten und zweiten Bildpunktes P0, P2 der horizontalen Lage des zu interpolierenden Bildpunktes Px entspricht. Weiterhin wird aus einem ebenfalls in Figur 1 schematisch dargestellten Halbbild B, welches vorzugsweise dem Halbbild A zeitlich nachfolgt oder vorausgeht, ein Bildpunkt P1 ausgewählt, der einer Bildzeile B2 entstammt, deren vertikale Lage der Lage der Zwischenzeile mit dem zu interpolierenden Bildpunkt Px in dem Halbbild A entspricht, wobei die horizontale Lage des in dem zweiten Halbbild B ausgewählten dritten Bildpunktes P1 der horizontalen Lage des zu interpolierenden Bildpunktes Px entspricht.

Jedem dieser Bildpunkte P0, P1, P2 ist ein Bildinformationswert, beispielsweise ein Helligkeitswert, beziehungsweise Luminanzwert, L0, L1, L2 zugeordnet. Diese Bildinformationswerte L0, L1, L2 sind in Figur 2 auf einer Bildinformationswertskala L nach oben aufgetragen, wobei die Bildinformationswerte im Fall von Helligkeitswerten beispielsweise Werte zwischen 0 und 255 annehmen können.

In dem in Figur 2 gewählten Beispiel sind die Bildinformationswerte L0, L1, L2 jeweils unterschiedlich groß, wobei der Bildinformationswert L1 des Bildpunktes P1 außerhalb eines durch den ersten Bildinformationswert L0 und den zweiten Bildinformationswert L2 vorgegebenen Intervalls liegt.

Erfindungsgemäß ist nun vorgesehen, zur Erzeugung eines Bildinformationswertes Lx des zu interpolierenden Zwischenpunktes Px die Bildinformationswerte des ausgewählten Bildpunkte P0, P1, P2 jeweils mit einem Gewichtungsfaktor K0, K1, K2 zu multiplizieren und die dadurch gewichteten Bildinformationswerte zu addieren, das heißt:

$$Lx = K0 \cdot L0 + K1 \cdot L1 + K2 \cdot L2. \tag{1}$$

Die Gewichtungsfaktoren K0, K1, K2 sind dabei so gewählt, dass der Bildinformationswert des resultierenden Bildpunktes Lx innerhalb des durch den ersten und zweiten Bildinformationswert L0, L2 vorgegebenen Intervalls liegt, wobei der dritte Gewichtungsfaktor K1 abhängig von seinem mathematischen Abstand zu den Intervallgrenzen gewählt ist, wobei in Figur 2 der Abstand des dritten Bildinformationswertes L1 zu der durch den zweiten Bildinformationswert L2 vorgegebenen oberen Intervallgrenze mit A bezeichnet ist.

Vorzugsweise sind der erste Bildinformationswert L0 und der zweite Bildinformationswert L2 gleichmäßig gewichtet, wobei für den Bildinformationswert Lx des zu interpolierenden Zwischenbildpunktes Px dann gilt:

$$Lx = (1-K1) \cdot (L0+L2)/2 + K1 \cdot L1. \tag{2}$$

Der aus dem ersten Bildpunkt L0 und dem zweiten Bildpunkt L2 resultierende Anteil an dem Bildinformationswert Lx entspricht dem in Figur 2 eingezeichneten Mittelwert M der Bildinformationswerte L0, L2, der mit einem Gewichtungsfaktor (1-K1) multipliziert ist, der sich aus der Differenz zwischen 1 und dem dritten Gewichtungsfaktor K1 ergibt, wobei die Summe aller Gewichtungsfaktoren K0, K1, K2, mit denen die Bildinformationswerte L0, L1, L2 multipliziert werden, stets 1 ist.

Damit in diesem Fall der Bildinformationswert Lx des interpolierten Bildpunktes Px innerhalb des durch L0 und L1 vorgegebenen Intervalls liegt und für den Gewichtungsfaktor $0 \leq K1 \leq 1$ gilt, muss folgende Ungleichung erfüllt sein:

$$|(1-K1) \cdot M + K1 \cdot L1-M| \leq |(L0-L2)/2 \,| \tag{3}$$

Für den dritten Gewichtungsfaktor K1 gilt bei einer Gleichgewichtung des ersten und zweiten Bildinformationswertes L0, L2 damit:

$$K1 \leq |(L0-L2)| / 2 \cdot |L1-M| \tag{4}$$

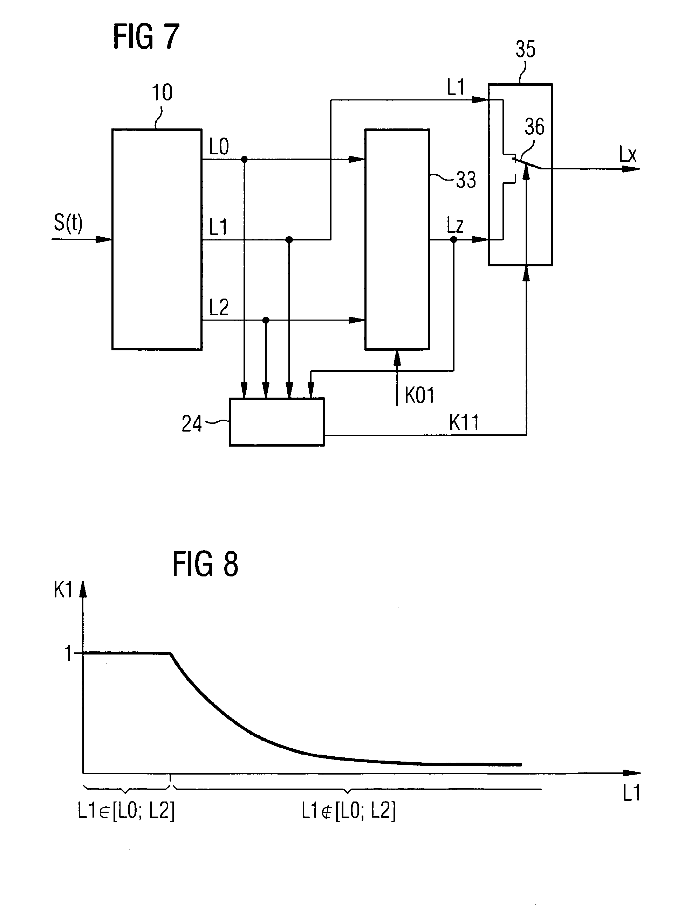

Figur 8 zeigt den Verlauf des oberen Grenzwerts des dritten Gewichtungsfaktors K1 gemäß obiger Ungleichung, wobei der dritte Gewichtungsfaktor bei der Darstellung gemäß Figur 8 zu Eins gesetzt ist, wenn der dritte Bildinformationswert L1 innerhalb des durch die Bildinformationswerte L0 und L2 vorgegebenen Intervalls liegt. Dargestellt in Figur 8 ist also:

$$K1 = 1 \qquad \text{für L1 innerhalb [L0;L1]} \tag{5.1}$$

$$K1 \leq |(L0-L2)| / 2 \cdot |L1-M| \qquad \text{für L1 außerhalb [L0;L1]} \tag{5.2}$$

Wird der dritte Gewichtungsfaktor K1 gleich dem in Gleichung (5.2) angegebenen Wert gesetzt, wenn der dritte Bildinformationswert L1 außerhalb des durch die Bildinformationswerte L0 und L2 vorgegebenen Intervalls liegt, gewählt, so liegt der resultierende Bildinformationswert Lx auf der jeweils dem dritten Bildinformationswert L1 nächstliegenden Intervallgrenze. Liegt der dritte Bildinformationswert L1 innerhalb dieses Intervalls, so kann der Gewichtungsfaktor neben dem Wert 1 auch andere Werte annehmen, wie noch erläutert wird.

Vorzugsweise ist der dritte Gewichtungsfaktor K1 so gewählt, dass er wesentlich kleiner als der in Gleichung (4) bzw. Gleichung (5.2) angegebene Grenzwert ist, indem für den Wert des dritten Gewichtungsfaktors K1 beispielsweise das Quadrat des rechten Ausdrucks der Ungleichung (4) oder der Gleichung (5.2) verwendet wird, oder indem im rechten Ausdruck der Nenner quadriert wird.

Sind die Bildinformationswerte L0 und L2 nicht gleichgewichtet so muss für den Gewichtungsfaktor K1 gelten, damit der resultierende Bildpunkt Lx auf den Intervallgrenzen oder innerhalb des Intervalls zwischen der oberen Intervallgrenze [L0; L2] liegt:

$$K1 \leq (M- (K0{\cdot}L0+K2{\cdot}L2){\pm}0{,}5{\cdot}\ |(L0{-}L2)|) / L1 \tag{6}$$

Ein Pluszeichen vor dem Ausdruck $0{,}5{\cdot}|(L0{-}L2)|$ bewirkt, dass der resultierende Bildinformationswert Lx größer als der Mittelwert ist, und ein Minuszeichen vor dem Ausdruck bewirkt, dass der resultierende Bildinformationswert kleiner als der Mittelwert ist.

Vorzugsweise ist der Gewichtungsfaktor K1 wesentlich kleiner als der im rechten Teil der Gleichung (6) angegebene Ausdruck.

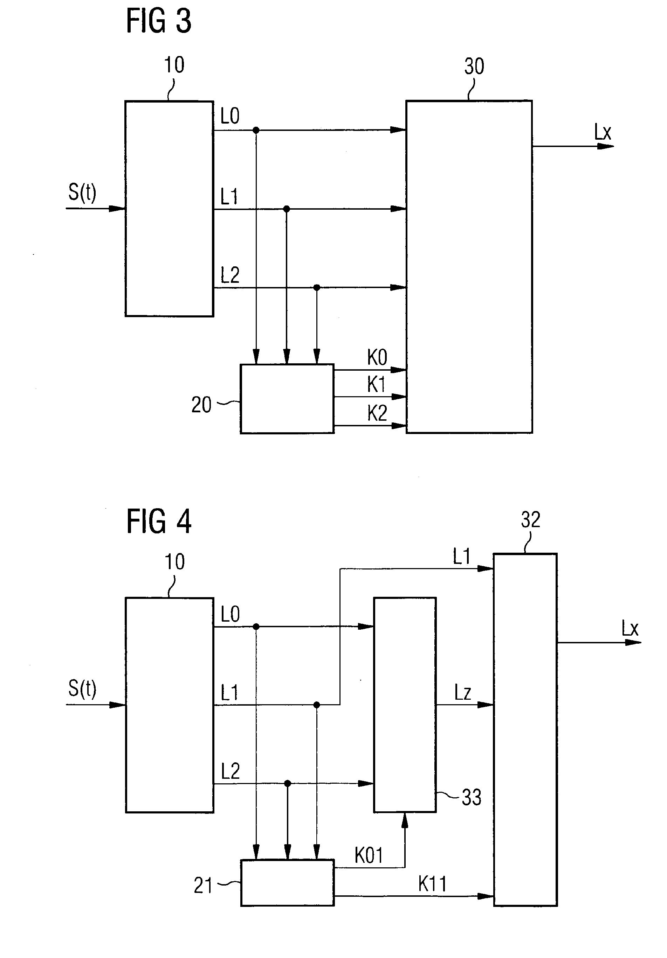

Figur 3 zeigt eine Vorrichtung zur Durchführung des erfindungsgemäßen Verfahrens, die eine Auswahleinrichtung 10 aufweist, der das Bildsignal S(t) zugeführt ist und die aus diesem Bildsignal die Bildeinformationswerte L0, L1, L2 herausfiltert und an Ausgängen bereitstellt. Die Bildinformationswerte L0, L1, L2 sind einer Analyseeinrichtung 20 zugeführt, die Gewichtungsfaktoren K0, K1, K2 aus den Bildinformationswerten L0, L1, L2 erzeugt, wobei die Bildinformationswerte L0, L1, L2 und die durch die Analyseeinrichtung 20 bereitgestellten Gewichtungsfaktoren K0, K1, K2 einer Mischeinrichtung 30 zugeführt sind, die den Bildinformationswert Lx durch Gewichten des ersten Bildinformationswertes L0 mit dem ersten Gewichtungsfaktor K0, des zweiten Bildinformationswertes L2 mit dem zweiten Gewichtungsfaktor K2 und des dritten Bildinformationswertes L1 mit dem dritten Gewichtungsfaktor K1 und Addieren der gewichteten Bildinformationswerte bereitstellt.

Figur 4 zeigt eine weitere Ausführungsform einer Vorrichtung zur Durchführung des erfindungsgemäßen Verfahrens, wobei das erfindungsgemäße Mischverfahren bei dieser Vorrichtung zweistufig durchgeführt wird. Die Bildinformationswerte L0, L1, L2 sind bei dieser Vorrichtung einer Analyseeinrichtung 21 zugeführt. Der erste Bildinformationswert L0 und der zweite Bildinformationswert L2 sind einer ersten Mischeinrichtung 33 zugeführt und ein am Ausgang der ersten Mischeinrichtung 33 anliegender Zwischen-Bildinformationswert Lz und der dritte Bildinformationswert L1 sind einer zweiten Mischeinrichtung 32 zugeführt. Die Analyseeinrichtung 21 erzeugt aus den Bildinformationswerten L0, L1, L2 einen Gewichtungsfaktor K01, der der ersten Mischeinrichtung 33 zugeführt ist, und einen zweiten Mischungsfaktor K11, der der zweiten Mischeinrichtung 32 zugeführt ist. Der Zwischen-Bildinformationswert Lz resultiert aus der Mischung des ersten Bildinformationswertes L0 und des zweiten Bildinformationswertes L2, wobei der Gewichtungsfaktor K01 beispielsweise angibt, wie stark der erste Bildinformationswert L0 gewichtet ist, das heißt für den Zwischen-Bildinformationswert gilt:

$$Lz = K01{\cdot}L0 + (1{-}K01)\ {\cdot}L2. \tag{7}$$

Der der zweiten Mischeinrichtung 32 zugeführte Gewichtungsfaktor K11 bestimmt, wie stark der dritte Bildinformationswert L1 gewichtet wird, wobei für den am Ausgang der zweiten Mischungseinrichtung anliegenden Bildinformationswert Lx gilt:

$$Lx = K11{\cdot}L1 + (1{-}K11){\cdot}Lz, \tag{8}$$

wobei Lz dem Mittelwert M der Bildinformationswerte L0, L2 entspricht, wenn der Gewichtungsfaktor K01 = 0,5 ist.

Der Gewichtungsfaktor K11 wird dabei so erzeugt, dass der resultierende Bildinformationswert Lx stets innerhalb der durch L0 und L2 vorgegebenen Intervallgrenzen liegt.

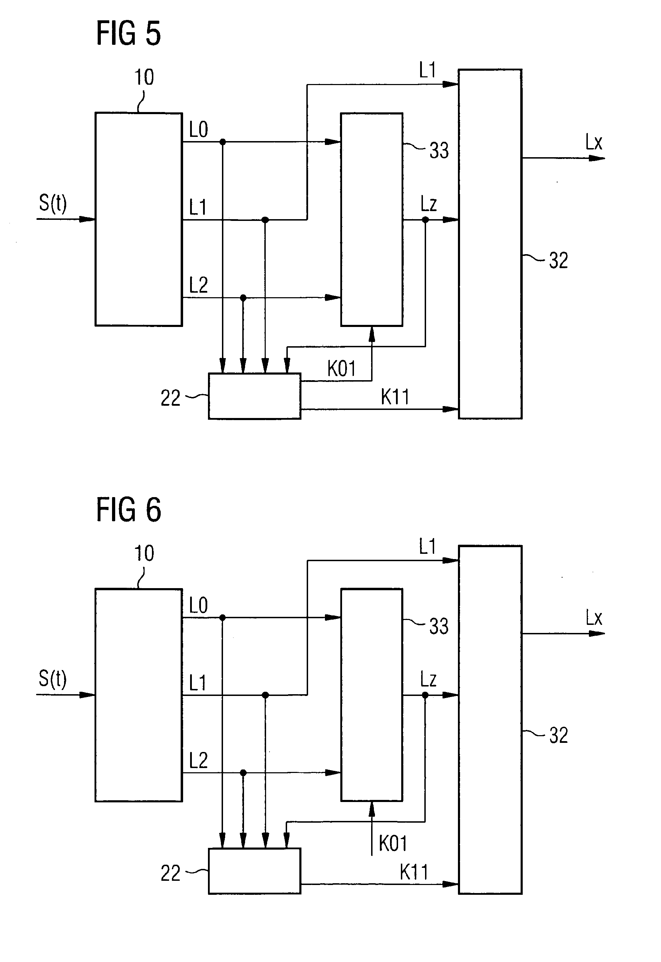

Figur 5 zeigt eine gegenüber Figur 4 abgewandelte Vorrichtung, bei der einer Analyseeinrichtung 22, die die Gewichtungsfaktoren K01 und K11 erzeugt, neben den Bildinformationswerten L0, L2 auch der am Ausgang der ersten Mischeinrichtung 33 anliegende Zwischen-Bildinformationswert Lz zugeführt ist.

Die Erzeugung des Gewichtungsfaktors K01, der die Gewichtung des ersten Bildinformationswertes L0 und des zweiten Informationswertes L2 untereinander angibt, abhängig von den Bildinformationswerten L0 und L2 ermöglicht beispielsweise, abhängig von der Intervallbreite einen dieser beiden Bildpunkte stärker zu gewichten.

Figur 6 zeigt, eine Vorrichtung, die gemäß Figur 5 dahingehend abgewandelt ist, dass der Gewichtungsfaktor K01 unabhängig von den Bildinformationswerten L0, L1, L2 konstant von extern vorgegeben ist und beispielsweise 0,5 beträgt.

Figur 7 zeigt eine Vorrichtung zur Durchführung des erfindungsgemäßen Verfahrens, bei welcher eine zweite Mischeinrichtung 35 einen Schalter 36 enthält, der abhängig von dem dritten Gewichtungsfaktor K11 entweder den dritten Bildinformationswert L1 oder den aus dem ersten und zweiten Bildinformationswert L0, L2 erzeugten Zwischen-Bildinformationswert als Ausgangsignal Lx ausgibt.

Die vorliegende Erfindung ist nicht auf die Bildverarbeitung beschränkt. Sie kann allgemein auf Signale angewendet werden, die aus einer Signalfolge mit Ausgangswerten und jeweils einem interpolierten Zwischenwert, der zwei Ausgangswerten zugeordnet ist, bestehen. Eine derartige Signalfolge ist beispielsweise eine durch Überabtasten einer Ausgangsfolge entstandene Folge, bei der jeweils ein interpolierter Zwischenwert zeitlich oder räumlich zwischen zwei Ausgangswerten liegt. Bekannte Interpolationsverfahren für eine solche Zwischenwerterzeugung liefern an Signalsprüngen, also bei großen Amplitudenunterschieden der beiden Ausgangswerte, von dem der interpolierte Zwischenwerte abhängt, häufig ungenügende Ergebnisse und Erzeugen insbesondere unerwünschte Überschwinger.

Abhilfe schafft hier eine Anwendung des oben erläuterten Verfahrens auf die Signalfolge mit den Ausgangswerten und den interpolierten Zwischenwerten, wobei einer der Ausgangswerte entsprechend dem ersten Bildinformationswert, der zweite der Ausgangswerte entsprechend dem zweiten Bildinformationswert und der Zwischenwert, der von dem ersten und zweiten Ausgangswert abhängig ist, entsprechend dem dritten Bildinformationswert bearbeitet wird. Der mittels des erfindungsgemäßen Verfahrens erzeugte Signalwert stellt einen korrigierten interpolierten Zwischenwert dar.

Bezugszeichenliste

| P0, P1, P2, | Px Bildpunkte |
|---|---|
| L0, L1, L2, | Lx Bildinformationswerte |
| St | Bildsignal |
| 10 | Auswahleinrichtung |
| 20, 21, 22, 24 | Analyseeinrichtung |
| 30 | Mischeinrichtung |
| 33 | erste Mischeinrichtung |
| 32, 35 | zweite Mischeinrichtung |
| K1, K2, K3 | Gewichtungsfaktoren |
| K01, K11 | Gewichtungsfaktoren |

**Patentansprüche**

1. Verfahren zur Interpolation eines Bildpunktes (Px) einer Zwischenzeile eines ersten Halbbildes in einer Folge von zeilenverkämmten Halbbildern (A, B), das folgende Verfahrensschritte aufweist:

   - Auswählen wenigstens eines ersten Bildpunktes (P0), dem ein erster Bildinformationswert (L0) zugeordnet ist, einer oberhalb der Zwischenzeile liegenden Bildzeile (A1) in dem ersten Halbbild (A) und wenigstens eines zweiten Bildpunktes (P2), dem ein zweiter Bildinformationswert (L2) zugeordnet ist, einer unterhalb der Zwischenzeile liegenden Bildzeile (A2) in dem ersten Halbbild (A),

   - Auswählen wenigstens eines dritten Bildpunktes (P1), dem ein dritter Bildinformationswert (L1) zugeordnet ist, aus einer Bildzeile (B2), deren vertikale Position der Position der Bildzeile des zu interpolierenden Bildpunktes (Px) entspricht, aus einem zweiten Halbbild (B),

   - Ermitteln eines durch den ersten und zweiten Bildinformationswert (L0, L2) gegebenen Intervalls,

   - Ermitteln der Position des dritten Bildinformationswertes (L1) bezogen auf die Intervallgrenzen,

   - Mischen der Bildinformationswerte (L0, L1, L2), indem der erste Bildinformationswert (L0) mit einem ersten Gewichtungsfaktor (k0), der zweite Bildinformationswert (L1) mit einem zweiten Gewichtungsfaktor (k1) und der dritte Bildinformationswert (L1) mit einem dritten Gewichtungsfaktor (k1) multipliziert und die gewichteten Bildinformationswerte addiert werden, um einen Bildinformationswert (Lx) des Bildpunktes (Px) der Zwischenzeile zu erhalten, wobei der Wert des dritten Gewichtungsfaktor (k1) von dem mathematischen Abstand des dritten Bildinformationswertes (L1) zu den Intervallgrenzen abhängig ist und die Gewichtungsfaktoren (k0, k1, k2) so gewählt sind, dass der Bildinformationswert des zu interpolierenden Bildpunktes innerhalb der Intervallgrenzen liegt.

2. Verfahren nach Anspruch 1, bei dem der dritte Gewichtungsfaktor mit zunehmendem Abstand zu der nächstliegenden Intervallgrenze abnimmt, wenn der dritte Bildinformationswert (L1) außerhalb des Intervalls liegt.

3. Verfahren nach Anspruch 2, bei dem der dritte Gewichtungsfaktor proportional zum Abstand zu der nächstliegenden Intervallgrenze abnimmt, wenn der dritte Bildinformationswert (L1) außerhalb des Intervalls liegt.

4. Verfahren nach Anspruch 1 oder 2, bei dem der erste und zweite Gewichtungsfaktor (k0, k2) gleich groß sind.

5. Verfahren nach einem der vorangehenden Ansprüche, bei dem der dritte Gewichtungsfaktor (k1) zu Null gesetzt wird, wenn sein mathematischer Abstand zu der nächstliegenden Intervallgrenze einen vorgegebenen auf die Intervallbreite normierten Wert übersteigt.

6. Verfahren nach Anspruch 5, bei dem der dritte Gewichtungsfaktor (k1) zu Null gesetzt wird, wenn sein mathematischer Abstand zu der nächstliegenden Intervallgrenze mehr als das Doppelte der Intervallbreite beträgt.

7. Verfahren nach einem der vorangehenden Ansprüche, bei dem der erste, zweite und dritte Gewichtungsfaktor (k0, k1, k2) gleich groß sind, wenn der dritte Bildinformationswert (L1) innerhalb des Intervalls liegt.

8. Verfahren nach einem der Ansprüche 1 bis 6 bei dem der Wert des dritten Gewichtungsfaktors (k1) mit abnehmendem Abstand zu der Mitte (M) des Intervalls zunimmt, wenn der dritte Bildinformationswert (L1) innerhalb des Intervalls liegt.

9. Verfahren nach einem der Ansprüche 1 bis 6, bei dem der dritte Gewichtungsfaktor (k1) zu Eins gesetzt wird, wenn der dritte Bildinformationswert (L1) innerhalb des Intervalls liegt.

10. Verfahren nach einem der Ansprüche 1 bis 6, bei dem der dritte Gewichtungsfaktor (k1) zu Eins gesetzt wird, wenn der mathematische Abstand des dritten Bildinformationswert (L1) zu der Mitte (M) des Intervalls kleiner als ein vorgegebener, auf die Intervallbreite normierter Wert ist.

11. Verfahren nach Anspruch 9, bei dem der dritte Gewichtungsfaktor (k1) zu Eins gesetzt wird, wenn der mathematische Abstand des dritten Bildinformationswert (L1) zu der Mitte (M) des Intervalls kleiner als ein Viertel der Intervallbreite ist.

12. Verfahren nach einem der vorangehenden Ansprüche, bei dem zunächst ein Zwischenwert aus dem ersten Bildinformationswert und dem zweiten Bildinformationswert erzeugt wird, indem der erste Bildinformationswert (L0) mit einem ersten Gewichtungsfaktor (k01) und der zweite Bildinformationswert (L2) mit einem zweiten Gewichtungsfaktor (k21) multipliziert und die gewichteten Bildinformationswerte addiert werden, und bei dem anschließend der Zwischenwert (Lz) mit dem dritten Bildinformationswert (L1) durch Gewichten des Zwischenwertes (Lz) und des dritten Bildinformationswertes (L1) und Addieren des gewichteten Zwischenwertes und des gewichteten dritten Bildinformationswertes zur Erzeugung der Bildinformation des zu interpolierenden Bildpunktes (Px) gemischt wird, wobei der Gewichtungsfaktor des dritten Bildinformationswertes (L1) von dessen mathematischem Abstand zu den Intervallgrenzen oder dem Zwischenwert (Lz) abhängig ist.

13. Verfahren nach Anspruch 12, bei dem der Gewichtungsfaktor des dritten Bildpunkts (L1) von dem mathematischen Abstand zu dem Zwischenwert abhängig ist.

14. Verfahren zum Bearbeiten einer Signalfolge, die Ausgangssignalwerte und interpolierte Zwischenwerte aufweist, wobei jeweils zwei Ausgangssignalwerten ein Zwischenwert zugeordnet ist, wobei das Verfahren folgende Verfahrensschritte aufweist:

- Ermitteln eines durch die Ausgangssignalwerte gegebenen Intervalls,

- Ermitteln der Position des Zwischenwertes bezogen auf die Intervallgrenzen,

- Mischen der Ausgangssignalwerte und des Zwischenwertes, indem einer der Ausgangssignalwerte mit einem ersten Gewichtungsfaktor, der andere der Ausgangssignalwerte mit einem zweiten Gewichtungsfaktor und der Zwischenwert mit einem dritten Gewichtungsfaktor multipliziert und die gewichteten Bildinformationswerte addiert werden, um einen interpolierten Zwischenwert zu erhalten, wobei der Wert des dritten Gewichtungsfaktors von dem mathematischen Abstand des Zwischenwertes zu den Intervallgrenzen abhängig ist und so gewählt ist, dass der Wert des zu interpolierenden Zwischenwertes innerhalb der Intervallgrenzen liegt.

# FIG 1

A1 ▭

A2 ▭ P0

Px

A3 ▭ P2

A4 ▭

Halbbild A

B1 ▭

B2 ▭ P1

B3 ▭

B4 ▭

Halbbild B

# FIG 2

$L$

255

$x$ L1

$A$ {

$x$ L2

} $D/2$

$D$ { $x$ M

} $D/2$

$x$ L0

0

## FIG 3

## FIG 4

## FIG 5

## FIG 6

## FIG 7

10

S(t) →

L0
L1
L2

33

K01

24

35

L1
36
Lx

Lz

K11

## FIG 8

K1

1

L1

L1∈[L0; L2]          L1∉[L0; L2]